# EUROPEAN PATENT APPLICATION

(11) **EP 4 815 580 A1**
(43) Date of publication of application: **30.09.2026**
(21) Application number: 24893607.2
(22) Date of filing: 22.11.2024
(51) Int. Cl.: H04W 56/00

(54) **COMMUNICATION METHOD, TERMINAL, AND NETWORK SIDE DEVICE**

(30) Priority: 24.11.2023 CN 202311588065
(71) Applicant: Vivo Mobile Communication Co., Ltd., Dongguan, Guangdong 523863 (CN)
(72) Inventor: WANG, Chengrui, Dongguan, Guangdong 523863 (CN); LIN, Zhipeng, Dongguan, Guangdong 523863 (CN)
(74) Representative: Walaski, Jan Filip
(86) International application number: PCT/CN2024/133922
(87) International publication number: WO 2025/108454

(57) **Abstract**

Disclosed in the present disclosure is a method for communication, which belongs to the terminal field of communication. The method for communication in embodiments of the present disclosure includes: receiving, by a terminal, first configuration information from a network side device, where the first configuration information is used for configuring a physical random access channel PRACH resource associated with at least one synchronization signal block SSB type; and determining, by the terminal, an SSB-to-PRACH resource association result of the at least one SSB type according to the first configuration information. In the embodiments of the present disclosure, PRACH resources associated with different SSB types can be configured separately, such that SSB-to-PRACH resource association relationships of the different SSB types can be configured flexibly, and requirements of the different SSB types for the PRACH resources can be met.

## Description

### CROSS-REFERENCE TO RELATED APPLICATIONS

The present disclosure claims priority to Chinese Patent Application No. 202311588065.8, filed with the China National Intellectual Property Administration on November 24, 2023 and entitled "METHOD FOR COMMUNICATION, TERMINAL, AND NETWORK SIDE DEVICE", which is incorporated herein by reference in its entirety.

### TECHNICAL FIELD

The present disclosure relates to the field of communication technologies, and in particular, to a method for communication, a terminal, and a network side device.

### BACKGROUND

A synchronization signal/physical broadcast channel block (SS/PBCH block, SSB) in 5G includes a primary synchronization signal (Primary Synchronization Signal, PSS), a secondary synchronization signal (SSS), a physical broadcast channel (Physical Boardcast Signal, PBCH), and a de-modulation reference signal (De-modulation Reference Signal, DMRS). In addition, a cell may configure, at one time-domain position for transmitting a physical random access channel (Physical Random Access Channel, PRACH), a plurality of frequency division multiplexing (Frequency Division Multiplexing, FDM) PRACH transmission occasions (transmission occasion) (or referred to as PRACH Occasion, referred to as RO for short).

In the related art, the numbers of ROs associated with all SSBs are the same. The number of associated ROs cannot be flexibly configured for different SSBs. How to flexibly configure an association relationship from an SSB to an RO needs to be resolved urgently.

### SUMMARY

Embodiments of the present disclosure provide a method for communication, a terminal, and a network side device, to flexibly configure SSB-to-PRACH resource association relationships of different SSB types, and meet requirements of the different SSB types for the PRACH resources.

In a first aspect, a method for communication is provided, which is performed by a terminal. The method includes:
receiving, by a terminal, first configuration information from a network side device, where the first configuration information is used for configuring a physical random access channel PRACH resource associated with at least one synchronization signal block SSB type; and
determining, by the terminal, an SSB-to-PRACH resource association result of the at least one SSB type according to the first configuration information.

In a second aspect, a method for communication is provided, which is performed by a network side device. The method includes:
determining, by a network side device, first configuration information, where the first configuration information is used for configuring a physical random access channel PRACH resource associated with at least one synchronization signal block SSB type; and
sending, by the network side device, the first configuration information to a terminal.

In a third aspect, a communication apparatus is provided, including:
a receiving module configured to receive first configuration information from a network side device, where the first configuration information is used for configuring a physical random access channel PRACH resource associated with at least one synchronization signal block SSB type; and
a determining module configured to determine an SSB-to-PRACH resource association result of the at least one SSB type according to the first configuration information.

In a fourth aspect, a communication apparatus is provided, including:
a determining module configured to determine first configuration information, where the first configuration information is used for configuring a physical random access channel PRACH resource associated with at least one synchronization signal block SSB type; and
a sending module configured to send the first configuration information to a terminal.

In a fifth aspect, a terminal is provided. The terminal includes a processor and a memory. The memory stores a program or instructions runnable on the processor. The program or the instructions, when executed by the processor, implement the steps of the method according to the first aspect.

In a sixth aspect, a terminal is provided. The terminal includes a processor and a communication interface, where the communication interface is configured to receive first configuration information from a network side device. The first configuration information is used for configuring a physical random access channel PRACH resource associated with at least one synchronization signal block SSB type. The processor is configured to determine an SSB-to-PRACH resource association result of the at least one SSB type according to the first configuration information.

In a seventh aspect, a network side device is provided. The network side device includes a processor and a memory. The memory stores a program or instructions runnable on the processor. The program or the instructions, when executed by the processor, implement the steps of the method according to the first aspect.

In an eighth aspect, a network side device is provided, including a processor and a communication interface, where the processor is configured to determine first configuration information. The first configuration information is used for configuring a physical random access channel PRACH resource associated with at least one synchronization signal block SSB type. The communication interface is configured to send the first configuration information to a terminal.

In a ninth aspect, a readable storage medium is provided. The readable storage medium stores a program or instructions. The program or the instructions, when executed by a processor, implement steps of the method according to the first aspect or implement steps of the method according to the second aspect.

In a tenth aspect, a wireless communication system is provided, including a terminal and a network side device. The terminal may be configured to perform steps of the method according to the first aspect. The network side device may be configured to perform steps of the method according to the second aspect.

In an eleventh aspect, a chip is provided. The chip includes a processor and a communication interface. The communication interface is coupled to the processor. The processor is configured to run a program or instructions, to implement the method according to the first aspect or the method according to the second aspect.

In a twelfth aspect, a computer program/program product is provided. The computer program/program product is stored in a storage medium. The computer program/program product is executed by at least one processor to implement the steps of the method according to the first aspect, or the steps of the method according to the second aspect.

In the embodiments of the present disclosure, the first configuration information is sent to the terminal by the network side device, such that the terminal can determine the SSB-to-PRACH resource association result of the at least one SSB type according to the first configuration information. PRACH resources associated with different SSB types can be configured separately, such that SSB-to-PRACH resource association relationships of the different SSB types can be configured flexibly, and requirements of the different SSB types for the PRACH resources can be met.

### BRIEF DESCRIPTION OF THE DRAWINGS

FIG. 1 is a block diagram of a wireless communication system to which an embodiment of the present disclosure is applicable;
FIG. 2 is a schematic diagram of mapping of an SSB to an RO;
FIG. 3 is another schematic diagram of mapping of an SSB to an RO;
FIG. 4 is a schematic diagram of mapping of an SSB to an RO group;
FIG. 5 is a schematic flowchart of a method for communication according to an embodiment of the present disclosure;
FIG. 6A is a schematic diagram of an RO group according to an embodiment of the present disclosure;
FIG. 6B is a schematic diagram of another RO group according to an embodiment of the present disclosure;
FIG. 6C is a schematic diagram of another RO group according to an embodiment of the present disclosure;
FIG. 7A is a schematic diagram of an SSB-to-RO association result according to an embodiment of the present disclosure;
FIG. 7B is a schematic diagram of another SSB-to-RO association result according to an embodiment of the present disclosure;
FIG. 8A is a schematic diagram of another SSB-to-RO association result according to an embodiment of the present disclosure;
FIG. 8B is a schematic diagram of another SSB-to-RO association result according to an embodiment of the present disclosure;
FIG. 8C is a schematic diagram of another SSB-to-RO association result according to an embodiment of the present disclosure;
FIG. 8D is a schematic diagram of another SSB-to-RO association result according to an embodiment of the present disclosure;
FIG. 9 is a schematic block diagram of a communication apparatus according to an embodiment of the present disclosure;
FIG. 10 is a schematic block diagram of another communication apparatus according to an embodiment of the present disclosure;
FIG. 11 is a schematic block diagram of a communication device according to an embodiment of the present disclosure;
FIG. 12 is a schematic structural diagram of a terminal according to an embodiment of the present disclosure; and
FIG. 13 is a schematic structural diagram of a network side device according to an embodiment of the present disclosure.

### DETAILED DESCRIPTION

Technical solutions in embodiments of the present disclosure are clearly described in the following with reference to the accompanying drawings in the embodiments of the present disclosure. Apparently, the described embodiments are some embodiments rather than all embodiments of the present disclosure. All other embodiments obtained by persons of ordinary skill in the art based on the embodiments of the present disclosure shall fall within the protection scope of the present disclosure.

The terms "first", "second", and the like in the present disclosure are used for distinguishing similar objects, but are not used for describing a specific order or precedence order. It should be understood that terms used in this way are interchangeable in appropriate circumstances, such that the embodiments of the present disclosure can be implemented in other orders than the order illustrated or described herein. In addition, objects distinguished by "first" and "second" are usually objects of one class with the number of objects unlimited. For example, a first object can indicate one or more first objects. In addition, "or" in the present disclosure indicates at least one of connected objects. For example, "A or B" covers three solutions, to be specific, a solution 1: including A and excluding B; a solution 2: including B and excluding A; and a solution 3: including both A and B. The character "/" generally indicates an "or" relationship between the associated objects.

A term "indication" in the present disclosure may be a direct indication (or an explicit indication), or may be an indirect indication (or an implicit indication). The direct indication may be understood as that a sender explicitly notifies a receiver of content such as specific information, an operation that needs to be performed, or a request result in a sent indication. The indirect indication may be understood as that a receiver determines corresponding information according to an indication sent by a sender, or performs determining and determines, according to a determining result, an operation that needs to be performed or a request result.

It should be noted that, the technology described in the embodiments of the present disclosure is not limited to a long term evolution (Long Term Evolution, LTE)/LTE-advanced (LTE-Advanced, LTE-A) system, and may further be applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, or another system. Terms "system" and "network" in the embodiments of the present disclosure are usually interchangeably used. The described technology may be applied to both the system and the radio technology mentioned above, or may be applied to another system and radio technology. A new radio (New Radio, NR) system is described below as an example. The term NR is used in most of the following description. Nevertheless, these technologies may alternatively be applied to a system other than the NR system, such as a 6th Generation (6^{th} Generation, 6G) communication system.

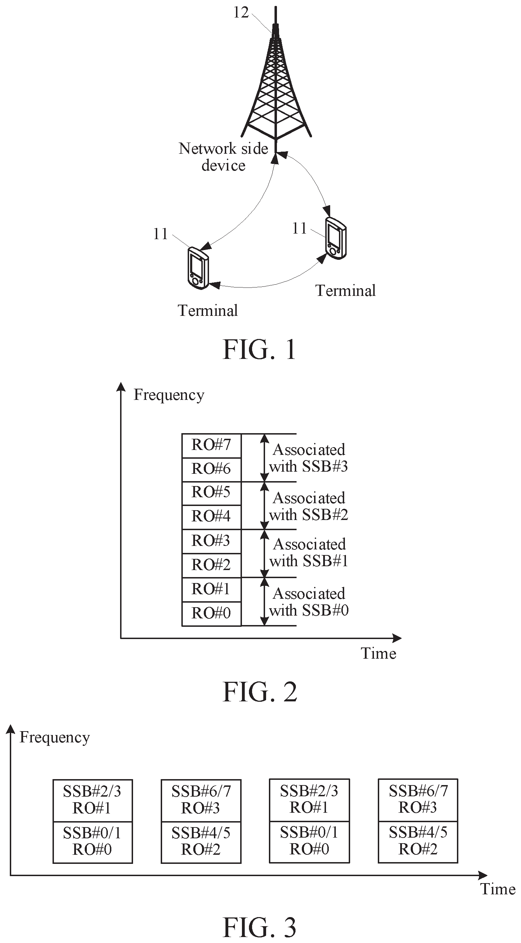

FIG. 1 shows a block diagram of a wireless communication system to which the embodiments of the present disclosure are applicable. The wireless communication system includes a terminal 11 and a network side device 12. The terminal 11 may be a terminal device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), a flight vehicle (flight vehicle), vehicle user equipment (Vehicle User Equipment, VUE), ship user equipment, pedestrian user equipment (Pedestrian User Equipment, PUE), smart home (a home device having a wireless communication function, such as a refrigerator, a television, a washing machine, or furniture), a game console, a personal computer (personal computer, PC), a teller machine, or a self-service machine. The wearable device includes: a smartwatch, a smart bracelet, a smart earphone, smart glasses, smart headwear (a smart bracelet, a smart chain bracelet, a smart ring, a smart necklace, a smart anklet, a smart anklet chain, and the like), a smart wristband, smart clothing, and the like. The vehicle user equipment may alternatively be referred to as a vehicle user terminal, a vehicle user controller, a vehicle user module, a vehicle user component, a vehicle user chip, a vehicle user unit, or the like. It should be noted that a specific type of the terminal 11 is not limited in the embodiments of the present disclosure. The network side device 12 may include an access network device or a core network device, where the access network device may alternatively be referred to as a radio access network (Radio Access Network, RAN) device, a radio access network function, or a radio access network unit. The access network device may include a base station, a wireless local area network (Wireless Local Area Network, WLAN) access point (Access Point, AS), a wireless fidelity (Wireless Fidelity, WiFi)) node, or the like. The base station may be referred to as a node B (Node B, NB), an evolved mode B (evolved Node B, eNB), the next generation node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP) or some other suitable terms in the field as long as the same technical effect is achieved. The base station is not limited to a specific technical word. It is to be noted that in the embodiments of the present disclosure, introduction is made only taking the base station in the NR system as an example, and the specific type of the base station is not limited.

First, an SSB-to-RO mapping rule involved in the present disclosure is described.

A synchronization signal/physical broadcast channel block (SS/PBCH block, SSB) in 5G includes a primary synchronization signal (Primary Synchronization Signal, PSS), a secondary synchronization signal (SSS), a physical broadcast channel (Physical Boardcast Signal, PBCH), and a de-modulation reference signal (De-modulation Reference Signal, DMRS). In a cell search process, a wireless device (terminal) provides a synchronization signal and a broadcast signal/channel from a base station cell to perform time-frequency domain synchronization with a base station, and obtains positions, in a frequency domain and a time domain, of a time-frequency resource of a cell deployed by the base station, and a physical cell ID.

The terminal further receives a system information block (System Information Block, SIB) 1 by receiving the SSB. The SIB1 includes various parameters of initial access. Configuration parameters of a PRACH resource and the SSB-to-RO mapping rule are configured in the system information block (System Information Block, SIB) 1. In an NR system, a cell may configure a plurality of FDM ROs at a time domain position for transmitting a PRACH. At a time point, a number of ROs allowing FDM may be {1, 2, 4, 8}, and is configured and determined through a high layer parameter msg1-FDM.

A random access preamble (preamble) can be transmitted only on time-domain resources configured by parameter PRACHConfigurationIndex and frequency-domain resources configured by parameter msg1-FDM. A PRACH frequency-domain resource is *n_{RA}* ∈ {0,1, ... , $ % 1}, where M is equal to high layer parameter msg1-FDM. During initial access, the PRACH frequency-domain resources are numbered in ascending order from an RO resource having a lowest frequency in an initial active uplink bandwidth part (initial active uplink bandwidth part), otherwise, the PRACH frequency-domain resources n_{RA} are numbered in ascending order from an RO resource having a lowest frequency in an active uplink bandwidth part (active uplink bandwidth part). For example, in FIG. 2, a number of FDM ROs at one time point is 8 (msg1-FDM=8), and RO resources are sequentially numbered, in descending order of frequency, as RO#0 to RO#7.

In the NR system, an association relationship exists between an RO and an actually sent SSB. The ROs are associated with the SSB in an order of a frequency domain (from a low frequency to a high frequency) first and then a time domain. One SSB may be associated with a plurality of continuous ROs, or a plurality of SSBs may be associated with 1 RO (in this case, different SSBs correspond to different Preambles). This is configured by a network through parameter ssb-perRACH-OccasionAndCB-PreamblesPerSSB.

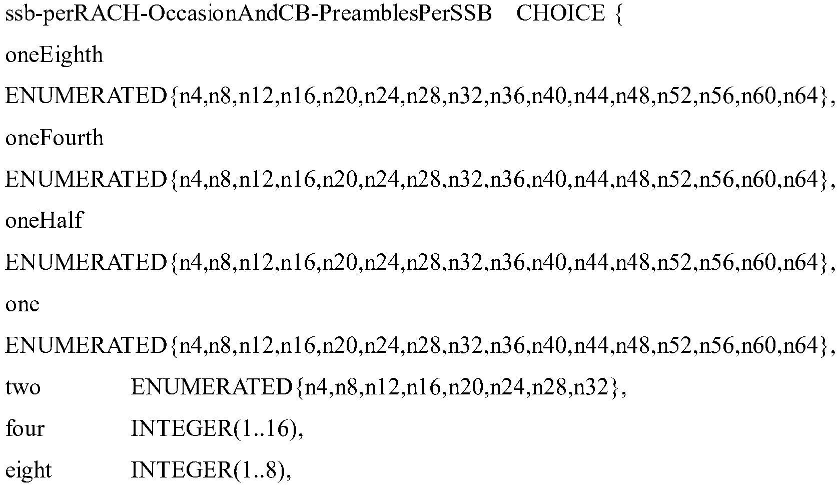

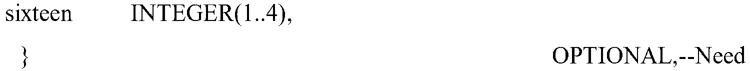

For example, oneEighth represents that one SSB is associated with 8 continuous ROs, eight represents that 8 SSBs are associated with one RO, and {n4, n8, n12, ...} represents a number of continuous Preambles associated with one SSB in one RO. For example, a value of n4 represents that the number of continuous Preambles associated with one SSB in one RO is 4, and n8 represents that the number of continuous Preambles associated with one SSB in one RO is 4.

One SSB-RO mapping cycle (SSB-RO mapping cycle) is formed after all SSBs are associated with the RO in one round. One SSB-RO association period (association period) may include 1 or more SSB-RO mapping cycles. One SSB-RO association pattern period (association pattern period) may include one or more SSB-RO association periods. Mapping from an SSB to an RO is repeated by using the association pattern period as a period. The association pattern period is 160 ms at maximum.

Usually, the base station may send different SSBs by using different beams, where the number of SSBs is configured through parameter ssb-PositionsInBurst. For example, for FR2, the maximum number of SSBs is 64. The terminal selects, according to strength of a received downlink beam SSB, an RO or an "RO and preamble combination" associated with an SSB having a better signal, to send Msg1. In this way, the network may determine, according to the received RO of the preamble or the "RO and preamble combination", an SSB selected by the terminal, and send Msg2 on a downlink beam corresponding to the SSB, to guarantee reception quality of a downlink signal.

With FIG. 2 as an example, the number of FDM ROs at a time point is 8, and a number of SSBs actually transmitted is 4, that is, SSB#0, an SSB#1, an SSB#2, and an SSB#3. Each SSB is associated with 2 ROs. In a case that the terminal determines to send PRACH/Msg1 to the RO corresponding to SSB#0, UE selects one RO from RO#0 and the RO#1 to send the PRACH.

With FIG. 3 as an example, the number of FDM ROs at a time point is 2, and a number of SSBs actually transmitted is 8, that is, SSB#0, SSB#1, ..., and SSB#7. Each 2 SSBs are associated with 1 RO. Each grid in FIG. 3 corresponds to one RO instead of SSB. An SSB marked in a grid refers to an SSB/SSBs associated with the RO. When a plurality of SSBs shares one RO, Preamble sets associated with the plurality of SSBs are different, that is, the same Preamble cannot simultaneously belong to Preamble sets associated with different SSBs. With RO#0 in FIG. 3 as an example, RO#0 has 60 Preambles in total. Preambles whose indexes range from 0 to 29 are associated with SSB#0. Preambles whose indexes range from 30 to 59 are associated with SSB#1.

Before sending the PRACH, the terminal first selects, according to reference signal receiving power (Reference Signal Receiving Power, RSRP) of the received beam (corresponding to the SSB), an SSB whose RSRP is higher than a threshold. In a case that a plurality of SSBs have RSRPs higher than the threshold, the terminal may select any SSB whose RSRP is higher than the threshold. In a case that no SSB has an RSRP higher than the threshold, the terminal may select an SSB based on implementation.

Based on configuration of the network (Network), the terminal may obtain a mapping relationship between an SSB and an RO. After an SSB is selected, an RO corresponding to the selected SSB is used as an RO for sending the PRACH/Preamble/Msg1. In a case that the selected SSB is associated with a plurality of ROs, the terminal may select one of the ROs to send the PRACH/Preamble/Msg1. For example, in the example shown in FIG. 2, assuming that the terminal selects SSB#1, the terminal may select one of RO#2 and RO#3 to send the PRACH/Msg1. In the example shown in FIG. 3, in a case that the terminal selects SSB#1, the terminal may select an available RO, closest to current time, in ROs (RO#0 or 4) associated with SSB#1 to send the PRACH/Msg1. In the selected RO, the terminal selects one preamble from a preamble set associated with the selected SSB to send the PRACH. As shown in FIG. 3, one RO is associated with 2 SSBs, in one RO, preambles in an available Preamble set associated with an SSB are divided into two subsets. Each subset corresponds to one SSB. The terminal selects a preamble sequence in the subset corresponding to the selected SSB to send the PRACH/Msg1.

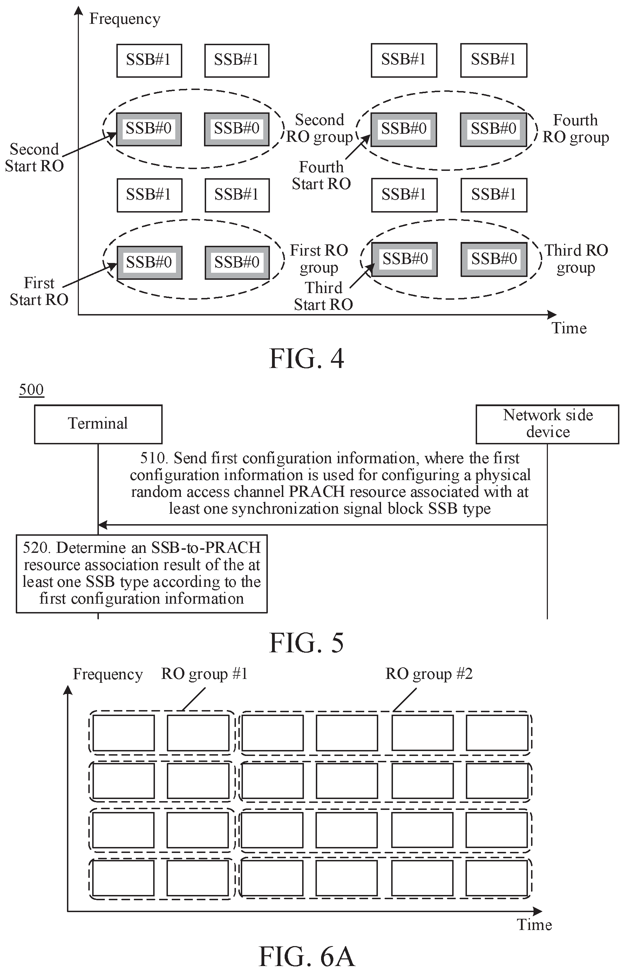

Secondly, a process of determining an RO set when a PRACH is repeatedly sent is described. PRACH repeated transmission is introduced in Rel-18, to enhance uplink coverage. For PRACH repeated transmission, the terminal needs to repeatedly send a Preamble on a plurality of ROs that are associated with the same SSB at different positions in a time domain, and a number of repetitions may be {2, 4, 8}. After determining the number of PRACH repetitions, the terminal needs to determine an RO set. A number of effective ROs in the RO set is equal to the number of PRACH repetitions. Assuming that the number of PRACH repetitions is N1, and an RO group (group) determining rule is: first a starting RO (starting RO) of an RO group is determined, and then remaining N1-1 ROs of the RO group are determined. Each of the remaining N1-1 of in the RO group is an RO associated with the same SSB, located at the same frequency position, and having the same associated Preamble set as the starting RO. For example, in FIG. 4, assuming that the number of PRACH repetitions is 2. For SSB#0, the following RO groups may be determined: a first RO group (1^{st} RO group), a second RO group (2^{st} RO group), a third RO group (3^{st} RO group), and a fourth RO group (4^{st} RO group).

An SSB in a future communication system (such as a 6G communication system) may be designed with different types (formats, which can also be referred to as structures, formats, etc.) to effectively support various terminal types, use case service types, and the like. Illustratively, terminal types may include, but are not limited to, enhanced mobile broadband (Enhanced Mobile Broadband, eMBB), ultra-reliable low-latency communications (Ultra-Reliable Low-Latency Communications, URLLC), reduced capability (Reduced Capability, RedCap), machine-type communication (Machine Communication, MTC), and Internet of Things (Internet of Things, loT) UE, which are not limited. Illustratively, the terminal types may include terminal devices having different capabilities, for example, terminals having different maximum radio frequency bandwidths, baseband bandwidths, system bandwidths, and channel bandwidths, supporting different frequency bands, and having downlink processing capabilities. Illustratively, different use case service types include, but are not limited to, use cases providing service types such as eMBB, URLLC, virtual reality/augmented reality (Virtual Reality/Augmented Reality, VR/AR), IOT, and a non terrestrial network (Non Terrestrial Network, NTN). Different SSB types may have different requirements on resources. For example, different SSB types are associated with different beams, and coverage ranges of the different beams are different. For example, different SSB types in an NTN cell may cover different ranges. For example, SSB#1 may cover an entire province, and SSB#1/2/3/4 may cover four territories in the province. In the related art, resource configuration corresponding to an SSB and mapping from the SSB to a resource are not flexible enough, which cannot meet requirements of different SSB types for resources.

In view of this, the embodiments of the present disclosure provide a method for communication, a terminal, and a network side device, to separately configure a PRACH resource associated with at least one synchronization signal block SSB type, such that SSB-to-PRACH resource association relationships of the different SSB types can be configured flexibly, and requirements of the different SSB types for the PRACH resources can be met.

The method for communication provided in the embodiments of the present disclosure is described in detail below through some embodiments and their application scenarios with reference to the accompanying drawings.

FIG. 5 is a schematic interactive diagram of a method for communication according to an embodiment of the present disclosure. As shown in FIG. 5, the method for communication includes the following steps 510 and 520.

510, a network side device sends first configuration information to a terminal, where the first configuration information is used for configuring a physical random access channel PRACH resource associated with at least one synchronization signal block SSB type. Correspondingly, the terminal receives the first configuration information from the network side device.

In the embodiment of the present disclosure, the SSB type may be referred to as a structure or format of a synchronization signal or broadcast channel, or may be referred to as an SSB structure or an SSB format, all of which have the same or similar meaning. Optionally, at least two SSBs may be divided into different groups according to the SSB type. One group of SSBs is one SSB type. For ease of description, in the embodiment of the present disclosure, the SSB type, the SSB structure, or the SSB type are collectively referred to as an SSB type.

Illustratively, different SSB types may be SSB types corresponding to different terminal types, including, but not limited to, different terminal types such as enhanced mobile broadband (Enhanced Mobile Broadband, eMBB), ultra-reliable low-latency communications (Ultra-Reliable Low-Latency Communications, URLLC), reduced capability (Reduced Capability, RedCap), machine-type communication (Machine-Type Communication, MTC), and Internet of Things (Internet of Things, loT) UE, which are not limited. Illustratively, different SSB types may be SSB types corresponding to terminals having different capabilities, and including, but not limited to, terminals having different maximum radio frequency bandwidths, baseband bandwidths, system bandwidths, and channel bandwidths, supporting different frequency bands, and having downlink processing capabilities. Illustratively, different SSB types may be SSB types corresponding to different use case service types, including, but not limited to, use cases providing service types such as eMBB, URLLC, AR/VR, IOT, and NTN. Optionally, the different SSB types further include SSBs in different frequency bands/different carrier frequencies, SSBs in different service types, SSBs configured on demand (on demand)/configured flexibly (flexible), and the like. This is not limited in the embodiment of the present disclosure.

In the embodiment of the present disclosure, the synchronization channel block SSB, that is, a synchronization signal/physical broadcast channel block (SS/PBCH block, SSB) may be any module including at least one of a synchronization signal, a broadcast signal, a broadcast channel (PBCH), or another system message downlink broadcast channel.

In some embodiments of the present disclosure, the PRACH resource includes a PRACH transmission occasion (PRACH transmission occasion), which is referred to as a PRACH occasion (Occasion), and is referred to as an RO for short. The RO includes at least one preamble (Preamble). In some other embodiments, the PRACH resource includes a preamble.

The PRACH resource associated with the SSB type is a PRACH resource associated with at least one SSB in the SSB type. In the embodiment of the present disclosure, the first configuration information is used for configuring a PRACH resource associated with at least one SSB type. That is, the first configuration information is used for configuring a PRACH resource associated with one SSB type, or for configuring PRACH resources associated with a plurality of SSB types. When the first configuration information is used for configuring a PRACH resource associated with one SSB type, a plurality of pieces of first configuration information may be used for configuring PRACH resources associated with a plurality of SSB types. When the first configuration information is used for configuring PRACH resources associated with a plurality of SSB type, one piece of first configuration information may be used for configuring the PRACH resources associated with the plurality of SSB types. Plurality includes at least two, that is, two or more.

520, the terminal determines an SSB-to-PRACH resource association result of the at least one SSB type according to the first configuration information. The SSB-to-PRACH resource association result of the SSB type refers to a PRACH resource associated with at least one SSB corresponding to the SSB type.

Accordingly, in the embodiments of the present disclosure, the first configuration information is sent to the terminal by the network side device, such that the terminal can determine the SSB-to-PRACH resource association result of the at least one SSB type according to the first configuration information. PRACH resources associated with different SSB types can be configured separately, such that SSB-to-PRACH resource association relationships of the different SSB types can be configured flexibly, and requirements of the different SSB types for the PRACH resources can be met.

In some embodiments, the first configuration information includes at least one of an SSB parameter, a PRACH resource set, or an SSB-to-PRACH resource association relationship.

Illustratively, the SSB parameter may include at least one of the following: a maximum number of SSBs corresponding to the SSB type, a number of SSBs used by a current cell, or at least one SSB used by a current cell.

Specifically, the maximum number of SSBs corresponding to the SSB type is a maximum number of SSBs in the same SSB type, for example, may be a maximum number of SSBs in each involved SSB type. As a specific example, the maximum number of SSBs corresponding to SSB type#1 may be 8.

Optionally, the first configuration information may further include bitmap (bitmap) information. The bitmap information is used for indicating the number of SSBs used by the current cell and the at least one SSB used by the current cell. For example, the bitmap information is [11110000], and is used for indicating that the first four SSBs in the 8 SSBs are currently used in the SSB type.

For example, the PRACH resource set refers to a currently available PRACH resource set, and may include at least one currently available RO resource or a preamble resource. For example, the preamble resource may be an available preamble resource on at least one RO. This is not limited in the present disclosure.

Illustratively, the SSB-to-PRACH resource association relationship is an SSB-to-PRACH resource mapping relationship. Optionally, the SSB-to-PRACH resource association relationship includes at least one of the following:
an association relationship from at least one SSB to at least one RO;
an association relationship from at least one SSB to at least one RO group; or
an association relationship from at least one SSB group to at least one RO group,
where the RO group includes at least one RO, and the SSB group includes at least one SSB.

The association relationship from at least one SSB to at least one RO may include a number of ROs associated with each SSB, or a number of SSBs associated with each RO. The association relationship from at least one SSB to at least one RO group may include a number of RO groups associated with each SSB, or a number of SSBs associated with each RO group. The association relationship from at least one SSB group to at least one RO group may include a number of RO groups associated with each SSB group, or a number of SSB groups associated with each RO group.

Optionally, the SSB-to-PRACH resource association relationship further includes a number of preambles associated with at least one SSB in one RO, or a number of preambles associated with at least one SSB group in one RO.

As an example, a number of ROs or RO groups associated with one SSB or one SSB group is N1, and a number of preambles associated with one SSB or one SSB group in one RO is R. As another example, a number of SSBs associated with one RO or one RO group is N2. In a case that N2≥1, one SSB or more SSBs are associated with one RO or one RO group. In a case that N2<1, one SSB or one SSB group is associated with (1/N2) ROs or RO groups. N1 or N2 may be configured by a network or stipulated by a protocol. This is not limited in the present disclosure.

In some embodiments, the first configuration information meets at least one of the following:
different SSB types correspond to the same SSB parameter, or different SSB types correspond to different SSB parameters;
different SSB types correspond to the same PRACH resource set, or different SSB types correspond to different PRACH resource sets; or
different SSB types correspond to the same SSB-to-PRACH resource association relationship, or different SSB types correspond to different SSB-to-PRACH resource association relationships.

That is, the first configuration information may configure the same SSB parameter (a common SSB parameter) for different SSB types, or configure different SSB parameters for different SSB types respectively. The first configuration information may configure the same PRACH resource set (a common PRACH resource set) for different SSB types, or configure different PRACH resource sets for different SSB types respectively. The first configuration information may configure the same SSB-to-PRACH resource association relationship (a common SSB-to-PRACH resource association relationship) for different SSB types, or configure different SSB-to-PRACH resource association relationships for different SSB types respectively.

In some embodiments, different SSBs or different SSB groups are associated with different numbers of ROs, different numbers of RO groups, or RO groups including different numbers of ROs.

In some embodiments, the RO group includes at least one of the following:
at least two ROs that are located at a same frequency domain position and are continuous in a time domain; and
at least two continuous ROs that are determined in an order of frequency domain first and then time domain; and
at least two ROs determined according to predefined rules.

Illustratively, FIG. 6A is a schematic diagram of an RO group. As shown in FIG. 6A, RO group #1 includes 2 ROs that are located at a same frequency domain position and are continuous in a time domain. RO group #2 includes 4 ROs that are located at a same frequency domain position and are continuous in a time domain.

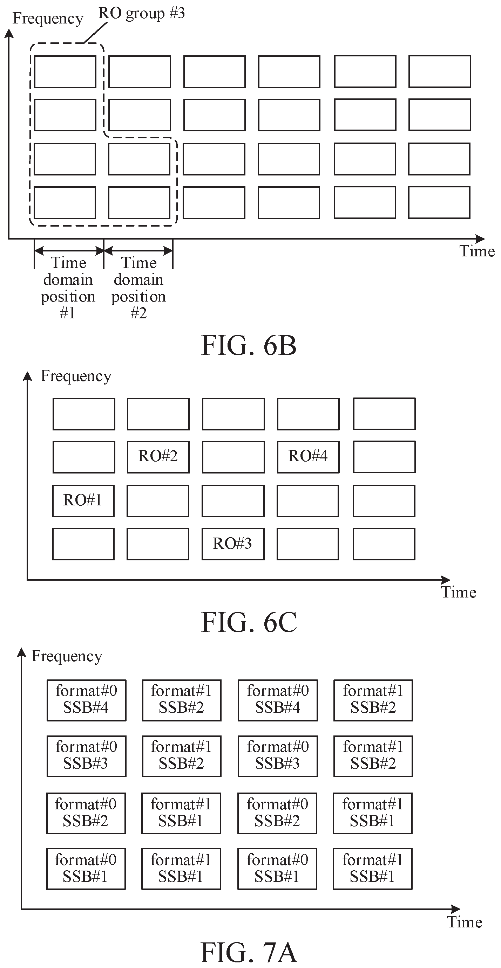

For example, as for at least two continuous ROs that are determined in an order of frequency domain first and then time domain, the at least two continuous ROs may be obtained from a plurality of ROs at a same time domain location according to a frequency domain, to obtain the RO group. Optionally, in a case that the number of ROs obtained according to the frequency domain is insufficient, at least one RO may be obtained from a subsequent time domain position according to the frequency domain, to obtain the RO group. Illustratively, FIG. 6B is another schematic diagram of an RO group. As shown in FIG. 6B, RO group #3 includes 4 ROs in a continuous frequency domain at time domain position #1 and 2 ROs in a lower frequency domain at time domain position #2.

Illustratively, the predefined rules may include a predefined frequency hopping rule. Illustratively, FIG. 6C is another schematic diagram of an RO group. As shown in FIG. 6C, RO group #4 includes at least two ROs with discontinuous time domain positions and frequency domain position, such as RO#1, RO#2, RO#3, and RO#4.

Optionally, a number of ROs in an RO group (that is, a size of the RO group) may be configured by a network, or may be pre-defined and determined by a protocol. This is not limited in the present disclosure.

In some embodiments, in step 510, the terminal may receive a system information block SIB1 from the network side device. The SIB1 includes the first configuration information.

Specifically, in the embodiment, different SSB types correspond to the same SIB1, and the same SIB1 includes configuration, corresponding to at least one (for example, each) SSB type, of a PRACH resource associated with the SSB type. That is, after the terminal selects an SSB type, the terminal can receive the same SIB1 from the network side device no matter which SSB type the terminal selects. The SIB1 may include the first configuration information, and is used for configuring a same common SSB parameter set for different SSB types, or configuring different SSB parameters respectively; configuring a same common PRACH resource set for different SSB types, or configuring different PRACH resources respectively; and configuring a common set of SSB-to-PRACH resource association relationships for different SSB types, or configuring different SSB-to-PRACH resource association relationships respectively. Different SSB types correspond to the same SIB1, such that signaling overhead can be reduced.

In some embodiments, in step 510, the terminal may receive at least one SIB1 from the network side device, where different SIB1s include the first configuration information corresponding to different SSB types.

Specifically, in the embodiment, different SSB types correspond to different SIB1s, and each SIB1 includes configuration, corresponding to a corresponding SSB type, of a PRACH resource associated with the SSB type. That is, after selecting an SSB type, the terminal may receive a corresponding SIB1 corresponding to the selected SSB type. The SIB1 includes the first configuration information corresponding to the SSB type, for example, an SSB parameter, a PRACH resource, and an SSB-to-PRACH resource association relationship corresponding to the SSB type. Different SSB types correspond to SIB1s respectively, to flexibly configure associated PRACH resources for the SSB types.

In some embodiments, in a case that at least two SSB types correspond to the same PRACH resource set, step 520 may include:
the terminal performs mapping in the same PRACH resource set according to SSBs corresponding to the at least two SSB types and the association relationships respectively corresponding to the at least two SSB types, and obtains SSB-to-PRACH resource association results of the at least two SSB types.

For example, in a case that at least two SSB types correspond to the same PRACH resource set, SSB-to-PRACH resource association relationships respectively corresponding to the at least two SSB types may be the same or not. This is not limited in the embodiment of the present disclosure. That is, a same SSB-to-PRACH resource association relationship may be applied to all SSBs of different SSB types, or SSB-to-PRACH resource association relationships may be applied to the SSBs respectively. Mapping is performed on the same PRACH resource set, to determine the SSB-to-PRACH resource association relationships of at least two SSB types together.

In some embodiments, the association relationships respectively corresponding to the at least two SSB types include at least one of the following:
a number ${N}_{TX}^{SSB _ type _ n}$ of SSBs corresponding to the n^{th} SSB type (type n), where n is a positive integer;
a number ${N}_{type _ n}^{SSBperRO}$ of SSBs, of the n^{th} SSB type, associated with one RO or RO group;
a number ${N}_{type _ n}^{ROperSSB}$ of ROs or RO groups associated with one SSB in the n^{th} SSB type; or
a number ${R}_{type _ n}^{Preamble}$ of preambles associated with one SSB of the n^{th} SSB type in one RO.

When ${N}_{type _ n}^{SSBperRO}$ is configured, it needs to be guaranteed that a product of reciprocals of ${N}_{TX}^{{SSB}_{{type}_{n}}}$ and ${N}_{type _ n}^{SSBperRO}$ is an integer, that is, ${N}_{TX}^{SSB _ type _ n} ∗ \left(1/{N}_{type _ n}^{SSBperRO}\right)$ is an integer, to guarantee that a number of ROs required by mapping the SSBs corresponding to the n^{th} SSB type in one round is an integer.

Optionally, ${N}_{type _ n}^{ROperSSB}$ and ${R}_{type _ n}^{Preamble}$ may not need to be configured simultaneously. Further, ${N}_{type _ n}^{ROperSSB} \geq 1$ and ${R}_{type _ n}^{Preamble} \leq {R}_{total}^{Preamble}$, where ${R}_{total}^{Preamble}$ is a total number of available preambles in one RO or an RO group.

For example, SSB format#0 and SSB format#1 correspond to a same PRACH resource set. SSB format#0 has 4 SSBs in total, and each SSB is associated with 1 RO. SSB format#1 has 2 SSBs in total, and each SSB is associated with 2 ROs. Then, an SSB-to-RO association result may be determined jointly for the total of 6 SSBs corresponding to SSB format#0 and SSB format#1. FIG. 7A is a schematic diagram of an SSB-to-RO association result determined jointly for the total of 6 SSBs corresponding to SSB format#0 and SSB format#1. Each grid indicates one RO instead of SSB, and an SSB marked in the RO is an SSB associated with the RO. As shown in FIG. 7A, an RO in a first time domain is sequentially associated, from low frequency to high frequency, with 4 SSBs, that is, format#0 SSB#1, format#0 SSB#2, format#0 SSB#3, and format#0 SSB#4, in SSB format#0. An RO in a second time domain is sequentially associated, from low frequency to high frequency, with 2 SSBs, that is, format#1 SSB#1 and format#1 SSB#2, in SSB format#1 (where one SSB is associated with 2 ROs); and so on.

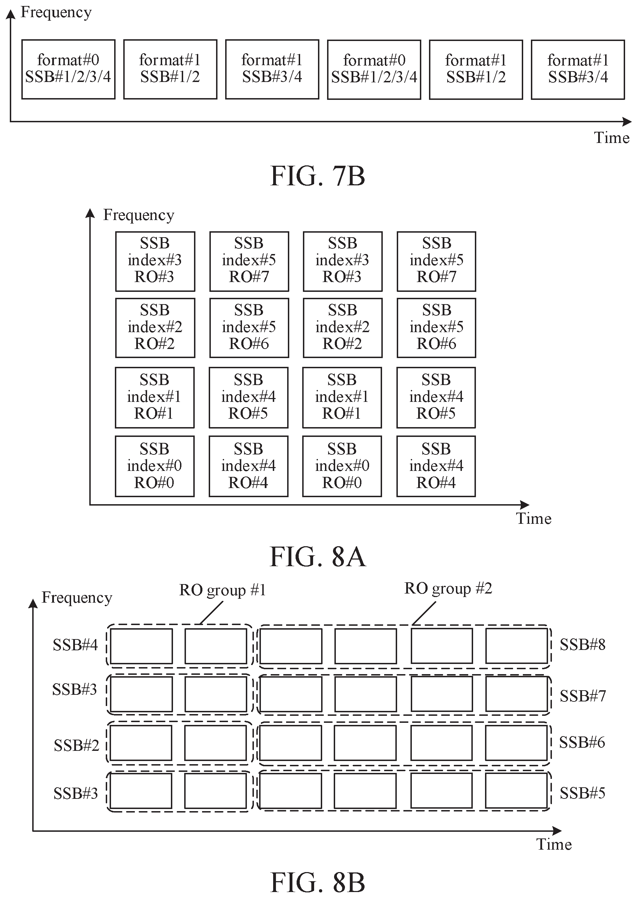

For another example, SSB format#0 and SSB format#1 correspond to a same PRACH resource set. SSB format#0 has 4 SSBs in total, and each 4 SSBs are associated with a same RO. SSB format#1 has 4 SSBs in total, and each 2 SSBs are associated with a same RO. Then, an SSB-to-RO association result may be determined jointly for the total of 8 SSBs corresponding to SSB format#0 and SSB format#1. FIG. 7B is another schematic diagram of an SSB-to-RO association result determined jointly for the total of 8 SSBs corresponding to SSB format#0 and SSB format#1. Each grid indicates one RO instead of SSB, and an SSB marked in the RO is an SSB associated with the RO. As shown in FIG. 7B, an RO at a first time domain position is associated with 4 SSBs, that is, format#0 SSB#1/2/3/4, in SSB format#0, an RO at a second time domain position is associated with 2 SSBs, that is, format#1 SSB#1/2, in SSB format#1, an RO at a third time domain position is associated with 2 SSBs, that is, format#1 SSB#3/4, in SSB format#1, and so on.

Optionally, in FIG. 7B, each RO has 64 preambles in total. In this way, for SSB format#0, each SSB is associated with 16 preambles in one RO, and for SSB format#1, each SSB is associated with 32 preambles in one RO. All SSBs of SSB format#0 and SSB format#1 are mapped to the ROs or the preambles sequentially.

In some embodiments, first indexes may be determined for all SSBs corresponding to the at least two SSB types sequentially, and a first order may be determined for each RO in the PRACH resource set; and all the SSBs corresponding to the at least two SSB types may be mapped to the ROs in the PRACH resource set according to the first indexes and the first order, and the SSB-to-PRACH resource association results of all the SSBs corresponding to the at least two SSB types may be obtained.

Illustratively, when only the number of ROs associated with each SSB type is configured, for example, when ${N}_{type_n}^{ROperSSB}$, one SSB is associated with all preambles in ${N}_{type_n}^{ROperSSB}$ ROs.In this case, a mapping rule from an SSB to an RO may be as described above. That is, indexes of all SSBs of different types are determined jointly, an order of all ROs is determined, and then each SSB is mapped to continuous ${N}_{type_n}^{ROperSSB}$ ROs, where ${N}_{type_n}^{ROperSSB}$ is the number of ROs associated with the n^{th} type (type n).

For example, SSB format#0 and SSB format#1 correspond to a same PRACH resource set. SSB format#0 has 4 SSBs in total, and each SSB is associated with 1 RO. SSB format#1 has 2 SSBs in total, and each SSB is associated with 2 ROs. The PRACH resource set may include 16 ROs. Then, indexes of the 6 SSBs may be determined sequentially, for example, may be SSB index#0/1/2/3/4/5 respectively. An order of the PRACH resource sets may be determined sequentially, for example, RO#0/1/2/3/4/5/6/7/8/9/10/11/12/13/14/15 respectively. An SSB-to-RO association result may be determined jointly for the 6 SSBs in the PRACH resource set. FIG. 8A is a schematic diagram of determining an SSB-to-RO association result for SSB index#0/1/2/3/4/5 jointly. Each grid indicates one RO instead of SSB, and an SSB marked in the RO is an SSB associated with the RO. As shown in FIG. 8A, RO#0 to RO#3 are associated with SSB index0/1/2/3 sequentially, and RO#4 to RO#7 are associated with SSB index#4/5 sequentially, where one SSB is associated with 2 ROs). SSBs associated with RO#8 to RO#15 are the same as those associated with RO#0 to RO#7.

For another example, SSB format#0 and SSB format#1 correspond to a same PRACH resource set. Each SSB is associated by using an RO group as a unit. The RO group is a group of ROs having a same frequency domain position and continuous in a time domain. RO groups associated with different SSBs may be different in size. Each SSB is associated with all preambles in the ROs. SSB format#0 has 4 SSBs in total, which are SSB#1, SSB#2, SSB#3, and SSB#4 respectively. Each SSB is associated with 1 RO group. A size of the RO group is 2 (that is, one RO group includes 2 ROs). SSB format#1 has 4 SSBs in total, which are SSB#5, SSB#6, SSB#7, and SSB#8 respectively. Each SSB is associated with 1 RO group. A size of the RO group is 4 (that is, one RO group includes 4 ROs). Then, an SSB-to-RO group association result may be determined jointly for the total of 8 SSBs corresponding to SSB format#0 and SSB format#1. FIG. 8B is a schematic diagram of an SSB-to-RO association result determined jointly for the total of 8 SSBs corresponding to SSB format#0 and SSB format#1. As shown in FIG. 8B, an RO group in a first time domain is sequentially associated, from low frequency to high frequency, with 4 SSBs, that is, SSB#1, SSB#2, SSB#3, and SSB#4, in SSB format#0. An RO group in a second time domain is sequentially associated, from low frequency to high frequency, with 4 SSBs, that is, SSB#5, SSB#6, SSB#7, and SSB#8, in SSB format#1; and so on.

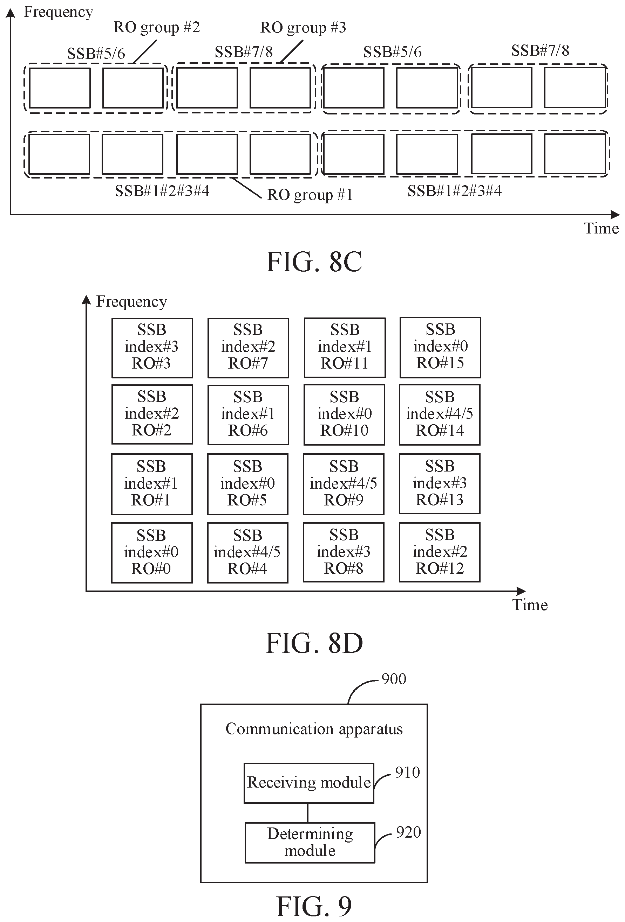

For another example, SSB format#0 and SSB format#1 correspond to a same PRACH resource set. Each SSB group (that is, a plurality of SSB) is associated by using an RO group as a unit. The RO group is a group of ROs having a same frequency domain position and continuous in a time domain. RO groups associated with different SSB groups may be different in size. SSB format#0 has 4 SSBs in total, which are SSB#1, SSB#2, SSB#3, and SSB#4 respectively. Each SSB is associated with 1 RO group. A size of the RO group is 2 (that is, one RO group includes 2 ROs). SSB format#1 has 4 SSBs in total, which are SSB#5, SSB#6, SSB#7, and SSB#8 respectively. Each SSB is associated with 1 RO group. A size of the RO group is 4 (that is, one RO group includes 4 ROs). Then, an SSB-to-RO group association result may be determined jointly for the total of 8 SSBs corresponding to SSB format#0 and SSB format#1. FIG. 8C is a schematic diagram of an SSB-to-RO association result determined jointly for the total of 8 SSBs corresponding to SSB format#0 and SSB format#1. As shown in FIG. 8C, RO group #1 is associated with 4 SSBs, that is, SSB#1, SSB#2, SSB#3, and SSB#4, in SSB format#0. RO group #2 is associated with first 2 SSBs, that is, SSB#5 and SSB#6, in SSB format#1. RO group #2 is associated with last 2 SSBs, that is, SSB#7 and SSB#8, in SSB format#1, and so on. A same SSB is associated with a same preamble in each RO in one RO, and different SSBs are associated with different preambles in one RO.

In some embodiments, second indexes may further be determined for all SSBs corresponding to the at least two SSB types sequentially; a second order may be determined for each RO in the PRACH resource set, and a third order may be determined for a preamble on the each RO; and all the SSBs corresponding to the at least two SSB types may be mapped to the preamble of the each RO in the PRACH resource set according to the second indexes, the second order, and the third order, and the SSB-to-PRACH resource association results of all the SSBs corresponding to the at least two SSB types may be obtained.

Illustratively, when only the number of preambles associated with each SSB type is configured, for example, when !_{&}^{"}_{'}^{#}_{$}^{$}₍^{_}₎^{%}_{*}^{+$,} a mapping rule from an SSB to an RO may be as described above. That is, indexes of all SSBs of different types are determined jointly, an order of all ROs is determined, and an order of preambles in each RO is determined. Then, each SSB is mapped to continuous !_{&}^{"}_{'}^{#}_{$}^{$}₍^{_}₎^{%}_{*}^{+$} preambles in an order of preamble first and then RO sequentially, where !_{&}^{"}_{'}^{#}_{$}^{$}₍^{_}₎^{%}_{*}^{+$} is the number of preambles associated with the n^{th} type (type n).

For example, SSB format#0 and SSB format#1 correspond to a same PRACH resource set. SSB format#0 has 4 SSBs in total, and each SSB is associated with 64 preambles. SSB format#1 has 2 SSBs in total, and each SSB is associated with 32 preambles. The PRACH resource set may include 16 ROs, and each RO may include 64 preambles. Then, indexes of the 6 SSBs may be determined sequentially, for example, may be SSB index#0/1/2/3/4/5 respectively. An order of the PRACH resource sets may be determined sequentially, for example, RO#0/1/2/3/4/5/6/7/8/9/10/11/12/13/14/15 respectively. An order of preambles on all ROs may be determined. An SSB-to-RO association result may be determined jointly for the 6 SSBs in the PRACH resource set. FIG. 8D is a schematic diagram of determining an SSB-to-RO association result for SSB index#0/1/2/3/4/5 jointly. Each grid indicates one RO instead of SSB, and an SSB marked in the RO is an SSB associated with the RO. As shown in FIG. 8D, 64 preambles on each of ROs of RO#0 to RO#3 are associated with SSB index0/1/2/3 sequentially, and 64 preambles on RO#4 are associated with SSB index#4/5 sequentially. SSBs associated with RO#5 to RO#9 are the same as those associated with RO#0 to RO#4, and so on.

In some embodiments, the association result from an SSB to an RO meets at least one of the following:
the SSB is associated with all preambles in one RO;
a same SSB is associated with a same preamble on each RO in one RO group, where the RO group includes at least one RO; or
different SSB are associated with different preambles on a same RO.

For example, when one SSB is associated with at least one RO or RO group, the SSB is associated with all preambles in the one RO. As a specific example, in FIG. 7A, FIG. 8A, and FIG. 8B, one SSB is associated with all preambles in one RO.

For example, when an SSB group is associated with an RO group, or an SSB group is associated with one RO, a same SSB is associated with a same preamble in each RO in one RO, or different SSBs are associated with different preambles in one RO. As a specific example, in FIG. 8C and FIG. 8D, a same SSB is associated with a same preamble in each RO in one RO, or different SSBs are associated with different preambles in one RO. In this way, resource collision of different SSBs in one RO can be avoided, and it is beneficial to detection performance of a receiving end is when a PRACH is sent repeatedly, to improve signal transmission reliability.

In some embodiments, at least one of a mapping cycle (mapping cycle), an association period (association period), or an association pattern period (association pattern period) from an SSB to a PRACH resource may further be determined, where the mapping cycle is a cycle where all the SSBs of the at least two SSB types are associated to the PRACH resource in one round, the association period includes at least one mapping cycle, and the association pattern period includes at least one association period.

Herein, the mapping cycle, the association period, or the association pattern period is a common value of a time period between all SSBs of different SSB types and ROs. Illustratively, a mapping cycle from an SSB to an RO (or an RO group) is ${\sum }_{n} {N}_{TX}^{SSB _ type _ n} ∗ \left(1/{N}_{type _ n}^{SSBperRO}\right)$, or ${\sum }_{n} {N}_{TX}^{SSB _ type _ n} ∗ {N}_{type _ n}^{ROperSSB}$, or ${\sum }_{n} {N}_{TX}^{SSB _ type _ n} ∗ \left({R}_{type _ n}^{Preamble}/{N}_{preamble}^{total}\right)$ .

For example, in FIG. 7A, FIG. 7B, FIG. 8A, FIG. 8B, FIG. 8C, and FIG. 8D, the mapping cycle is a cycle where all SSBs of SSB format#0 and SSB format#1 are associated with the RO or the RO group in one round. The association period may include 1 or more mapping cycles. The association pattern period may include 1 or more association periods. Optionally, the association pattern period is a period where a relationship between an SSB and an RO forms a repeatable mode. Optionally, the association pattern period does not exceed maximum time stipulated by a protocol.

Optionally, a first time window may be determined according to at least one of the mapping cycle, the association period, or the association pattern period, where the first time window is an integer multiple of the mapping cycle, the association period, or the association pattern period. The terminal may send a signal to the network side device in the first time window according to the SSB-to-PRACH resource association results of the at least two SSB types. For example, the signal is a PRACH. When time exceeds the first time window, the terminal sends no signal. Herein, by setting that the terminal sends a signal in the first time window, it can be guaranteed that there are sufficient PRACH resources in the window for the terminal to select to send a signal.

In some embodiments, in a case that the at least two SSB types correspond to different PRACH resource sets, step 520 may include:

the terminal performs, according to SSBs respectively corresponding to the at least two SSB types and the association relationships respectively corresponding to the at least two SSB types, mapping in the PRACH resource sets corresponding to the at least two SSB types separately, and SSB-to-PRACH resource association results of the at least two SSB types are obtained.

That is, the at least two SSB types may correspond to different PRACH resource sets respectively and correspond to SSB-to-PRACH resource association relationships respectively. Thus the SSB-to-PRACH resource association results are separately determined for the at least two SSB types. That is, mapping is performed in the respectively corresponding PRACH resource sets according to the association relationships, to obtain the SSB-to-PRACH resource association results of the at least two SSB types respectively.

Illustratively, a mapping cycle from each SSB type to an RO (or an RO group) is ${N}_{TX}^{SB _ type _ n} ∗ \left(1/{N}_{type _ n}^{SSBperRO}\right)$, or ${N}_{TX}^{SSB _ type _ n} ∗ {N}_{type _ n}^{ROperSSB}$, or ${N}_{TX}^{SSB _ type _ n} ∗ \left({R}_{type _ n}^{Preamble}/{N}_{preamble}^{total}\right)$ .

In some embodiments, the terminal may further send, according to the SSB-to-PRACH resource association results of the at least two SSB types, a signal to the network side device in at least two second time windows respectively corresponding to the at least two SSB types. That is, each SSB type corresponds to a second time window. The terminal selects, in the time window corresponding to each SSB type, a corresponding associated RO to send the signal to the network side device.

In some embodiments, at least one of a mapping cycle, an association period, or an association pattern period, from an SSB to a PRACH resource, of the at least two SSB types may be determined separately, where the mapping cycle of each of the SSB types is a cycle where all SSBs of each of the SSB types are associated to the PRACH resource in one round, the association period includes at least one mapping cycle, and the association pattern period includes at least one association period. Then, the second time window of each of the SSB types may be determined according to at least one of the mapping cycle, the association period, or the association pattern period of each of the SSB types.

In some embodiments, the second time window of each of the SSB types is an integer multiple of the mapping cycle, the association period, or the association pattern period corresponding to each of the SSB types.

In some embodiments, the at least two second time windows are determined according to the maximum mapping cycles, association periods, or association pattern periods of the at least two SSB types respectively. In this case, the second time windows corresponding to the at least two SSB types are equal.

Accordingly, by setting that the terminal sends a signal in the second time windows, it can be guaranteed that for each SSB type, there are sufficient PRACH resources in the windows for the terminal to select to send a signal.

In some embodiments, the terminal may further receive second configuration information from the network side device, where the second configuration information is used for updating at least one of an SSB parameter, a PRACH resource set, or an association relationship that correspond to the at least one SSB type. Specifically, the second configuration information is similar to the foregoing first configuration information. Reference may be made to related descriptions above, and details are not described herein. Correspondingly, the terminal determines an SSB-to-PRACH resource association result of a corresponding SSB type by using the updated SSB parameter, the PRACH resource set, and the association relationship.

Accordingly, the second configuration information is sent to the terminal, such that dynamic configuration of the PRACH resource associated with at least one SSB type can be implemented.

In some embodiments, the second configuration information may perform activation/deactivation configuration on a PRACH resource set and an SSB-to-PRACH resource association relationship for at least some SSB types, to update the PRACH resource set and the SSB-to-PRACH resource association relationship.

In some embodiments, the terminal may receive signaling from the network side device. The signaling is used for indicating the second configuration information. Illustratively, the signaling includes at least one of an RRC, a physical downlink control channel PDCCH, or a medium access control (Medium Access Control, MAC) control element (Control Element, CE).

In some embodiments, when an SSB type of the terminal changes, for example, when the terminal switches from an SSB type to another SSB type, or some current SSBs are deactivated, or some new SSBs are activated, the terminal applies an SSB parameter and a PRACH resource corresponding to the switched SSB type, and a corresponding SSB-to-PRACH resource association relationship, and determines an SSB-to-PRACH resource association result of the switched SSB type. Herein, the SSB parameter and the PRACH resource corresponding to the switched SSB type, and the corresponding SSB-to-PRACH resource association relationship are updated (for example, latest) configuration.

As an example, different SSB types correspond to different service types, for example, SSB format#1 corresponds to an eMBB service, and SSB format#2 corresponds to an NTN service. When the terminal switches from the eMBB service to the NTN service, the terminal selects to switch the SSB type from SSB format#1 to SSB format#2, and selects, by using a corresponding SSB-to-RO association relationship in a PRACH resource set corresponding to SSB format#2, a PRACH resource sending message (for example, Msg1) to request a service corresponding to the NTN.

As another example, 8 SSBs are provided in total. An SSB currently used by the terminal may be indicated through a bitmap, where 1 indicates that a corresponding SSB is used, and 0 indicates that a corresponding SSB is not used. At time point t1, it may be indicated that the bitmap is [11110000], that is, the first 4 SSBs are used. In this way, when determining the SSB-to-RO association relationship, the terminal needs to consider only the first 4 SSBs. At next time point t2, it indicates that the bitmap is [11111111], that is, the last 4 SSBs are activated, such that the terminal uses all 8 SSBs. In this way, the terminal needs to apply SSB-to-RO association relationships corresponding to the 8 SSBs, and re-determines an SSB-to-RO association result.

Accordingly, in the embodiment of the present disclosure, when an SSB type is updated, an SSB-to-PRACH resource association result of an updated SSB type can be determined.

In the method for communication according to the embodiment of the present disclosure, an executing component may be a communication apparatus. A communication apparatus according to an embodiment of the present disclosure is described with an example in which the communication apparatus performs a method for communication in the embodiment of the present disclosure.

FIG. 9 is a schematic block diagram of a communication apparatus 900 according to an embodiment of the present disclosure. Illustratively, the communication apparatus 900 may be a terminal. As shown in FIG. 9, the communication apparatus 900 includes a receiving module 910 and a determining module 920.

The receiving module 910 is configured to receive first configuration information from a network side device, where the first configuration information is used for configuring a physical random access channel PRACH resource associated with at least one synchronization signal block SSB type.

The determining module 920 is configured to determine an SSB-to-PRACH resource association result of the at least one SSB type according to the first configuration information.

In some embodiments, the first configuration information includes at least one of an SSB parameter, a PRACH resource set, or an SSB-to-PRACH resource association relationship.

In some embodiments, the first configuration information meets at least one of the following:
different SSB types correspond to the same SSB parameter, or different SSB types correspond to different SSB parameters;
different SSB types correspond to the same PRACH resource set, or different SSB types correspond to different PRACH resource sets; or
different SSB types correspond to the same association relationship, or different SSB types correspond to different association relationships.

In some embodiments, the SSB parameter includes at least one of the following:
a maximum number of SSBs corresponding to the SSB type, a number of SSBs used by a current cell, or at least one SSB used by a current cell.

In some embodiments, the SSB-to-PRACH resource association relationship includes at least one of the following:
an association relationship from at least one SSB to at least one PRACH transmission occasion RO;
an association relationship from at least one SSB to at least one RO group; or
an association relationship from at least one SSB group to at least one RO group,
where the RO group includes at least one RO, and the SSB group includes at least one SSB.

In some embodiments, different SSBs or different SSB groups are associated with different numbers of ROs, different numbers of RO groups, or RO groups including different numbers of ROs.

In some embodiments, the RO group includes at least one of the following:
at least two ROs that are located at a same frequency domain position and are continuous in a time domain; and
at least two continuous ROs that are determined in an order of frequency domain first and then time domain; and
at least two ROs determined according to predefined rules.

In some embodiments, in a case that at least two SSB types correspond to the same PRACH resource set, the determining module 920 is specifically configured to:
perform mapping in the same PRACH resource set according to SSBs corresponding to the at least two SSB types and the association relationships respectively corresponding to the at least two SSB types, and obtain SSB-to-PRACH resource association results of the at least two SSB types.

In some embodiments, the association relationships respectively corresponding to the at least two SSB types include at least one of the following:
a number ${N}_{TX}^{{SSB}_{{type}_{n}}}$ of SSBs corresponding to the n^{th} SSB type, where n is a positive integer;
a number ${N}_{type _ n}^{1}$ of SSBs, of the n^{th} SSB type, associated with one RO or RO group;
a number ${N}_{type _ n}^{2}$ of ROs or RO groups associated with one SSB in the n^{th} SSB type; or
a number ${R}_{type _ n}^{Preamble}$ of preambles associated with one SSB of the n^{th} SSB type in one RO.

In some embodiments, a product of reciprocals of ${N}_{TX}^{{SSB}_{{type}_{n}}}$ and ${N}_{type _ n}^{1}$ is an integer.

In some embodiments, the determining module 920 is specifically configured to:
determine first indexes for all SSBs corresponding to the at least two SSB types sequentially, and determine a first order for each RO in the PRACH resource set; and
map all the SSBs corresponding to the at least two SSB types to the ROs in the PRACH resource set according to the first indexes and the first order, and obtain the SSB-to-PRACH resource association results of all the SSBs corresponding to the at least two SSB types.

In some embodiments, the determining module 920 is specifically configured to:
determine second indexes for all SSBs corresponding to the at least two SSB types sequentially;
determine a second order for each RO in the PRACH resource set, and determine a third order for a preamble on the each RO; and
map all the SSBs corresponding to the at least two SSB types to the preamble of the each RO in the PRACH resource set according to the second indexes, the second order, and the third order, and obtain the SSB-to-PRACH resource association results of all the SSBs corresponding to the at least two SSB types.

In some embodiments, the determining module 920 is further configured to:
determine at least one of a mapping cycle, an association period, or an association pattern period from an SSB to a PRACH resource, where the mapping cycle is a cycle where all the SSBs of the at least two SSB types are associated to the PRACH resource in one round, the association period includes at least one mapping cycle, and the association pattern period includes at least one association period; and
determine a first time window according to at least one of the mapping cycle, the association period, or the association pattern period, where the first time window is an integer multiple of the mapping cycle, the association period, or the association pattern period.

The communication apparatus 900 further includes a sending unit, which is configured to:
send a signal to the network side device in the first time window according to the SSB-to-PRACH resource association results of the at least two SSB types.

In some embodiments, in a case that at least two SSB types correspond to different PRACH resource sets, the determining module 920 is specifically configured to:
perform, according to SSBs respectively corresponding to the at least two SSB types and the association relationships respectively corresponding to the at least two SSB types, mapping in the PRACH resource sets corresponding to the at least two SSB types separately, and obtain SSB-to-PRACH resource association results of the at least two SSB types.

In some embodiments, the sending module is further configured to:
send, according to the SSB-to-PRACH resource association results of the at least two SSB types, a signal to the network side device in at least two second time windows respectively corresponding to the at least two SSB types.

In some embodiments, the determining module 920 is further configured to:
determine at least one of a mapping cycle, an association period, or an association pattern period, from an SSB to a PRACH resource, of the at least two SSB types separately, where the mapping cycle of each of the SSB types is a cycle where all SSBs of each of the SSB types are associated to the PRACH resource in one round, the association period includes at least one mapping cycle, and the association pattern period includes at least one association period; and
determine the second time window of each of the SSB types according to at least one of the mapping cycle, the association period, or the association pattern period of each of the SSB types.

In some embodiments, the second time window of each of the SSB types is an integer multiple of the mapping cycle, the association period, or the association pattern period corresponding to each of the SSB types.

In some embodiments, the at least two second time windows are determined according to the maximum mapping cycles, association periods, or association pattern periods of the at least two SSB types respectively.

In some embodiments, the PRACH resource includes an RO or a preamble.

In some embodiments, one RO includes at least one preamble, and the association result meets at least one of the following:
the SSB is associated with all preambles in one RO;
a same SSB is associated with a same preamble on each RO in one RO group, where the RO group includes at least one RO; or
different SSB are associated with different preambles on a same RO.

In some embodiments, the receiving module 910 is specifically configured to:
receive a system information block SIB1 from the network side device, where the SIB1 includes the first configuration information.

In some embodiments, the receiving module 910 is specifically configured to:
receive at least one SIB1 from the network side device, where different SIB1s includes the first configuration information corresponding to different SSB types.

In some embodiments, the receiving module 910 is further configured to:
receive second configuration information from the network side device, where the second configuration information is used for updating at least one of an SSB parameter, a PRACH resource set, or an association relationship that correspond to the at least one SSB type.

In some embodiments, the receiving module 910 is specifically configured to:
receive signaling from the network side device, where the signaling is used for indicating the second configuration information; and the signaling includes at least one of an RRC, a physical downlink control channel PDCCH, or a medium access control MAC control element CE.

The communication apparatus 900 in the embodiment of the present disclosure may be an electronic device, such as an electronic device having an operating system, or a component in the electronic device, such as an integrated circuit or a chip. The electronic device may be a terminal, or may be another device other than a terminal. Illustratively, the terminal may include, but is not limited to, the terminal 11 of the above listed types. The another device may be a server, a network attached storage (Network Attached Storage, NAS), or the like. This is not specifically limited in the embodiment of the present disclosure.

The communication apparatus 900 according to the embodiment of the present disclosure can implement each process implemented by the terminal in the method embodiment of FIG. 5, and achieve the same technical effect. To avoid repetition, details are not described herein.

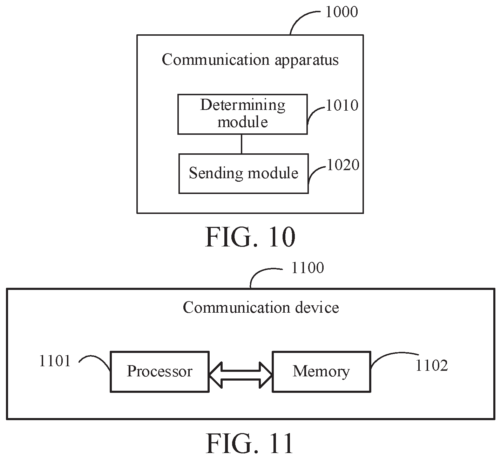

FIG. 10 is a schematic block diagram of a communication apparatus 1000 according to an embodiment of the present disclosure. Illustratively, the communication apparatus 1000 may be a network side device. As shown in FIG. 10, the communication apparatus 1000 includes a determining module 1010 and a sending module 1020.

The determining module 1010 is configured to determine first configuration information, where the first configuration information is used for configuring a physical random access channel PRACH resource associated with at least one synchronization signal block SSB type.

The sending module 1020 is configured to send the first configuration information to a terminal.

In some embodiments, the first configuration information includes at least one of an SSB parameter, a PRACH resource set, or an SSB-to-PRACH resource association relationship.

In some embodiments, the first configuration information meets at least one of the following:
different SSB types correspond to the same SSB parameter, or different SSB types correspond to different SSB parameters;
different SSB types correspond to the same PRACH resource set, or different SSB types correspond to different PRACH resource sets; or
different SSB types correspond to the same association relationship, or different SSB types correspond to different association relationships.

In some embodiments, the SSB parameter includes at least one of the following:
a maximum number of SSBs corresponding to the SSB type, a number of SSBs used by a current cell, or at least one SSB used by a current cell.

In some embodiments, the SSB-to-PRACH resource association relationship includes at least one of the following:
an association relationship from at least one SSB to at least one PRACH transmission occasion RO;
an association relationship from at least one SSB to at least one RO group; or
an association relationship from at least one SSB group to at least one RO group,
where the RO group includes at least one RO, and the SSB group includes at least one SSB.

In some embodiments, different SSBs or different SSB groups are associated with different numbers of ROs, different numbers of RO groups, or RO groups including different numbers of ROs.

In some embodiments, the RO group includes at least one of the following:
at least two ROs that are located at a same frequency domain position and are continuous in a time domain; and
at least two continuous ROs that are determined in an order of frequency domain first and then time domain; and
at least two ROs determined according to predefined rules.

In some embodiments, the PRACH resource includes an RO or a preamble.

In some embodiments, the sending module 1020 is specifically configured to:
send a system information block SIB1 to the terminal, where the SIB1 includes the first configuration information.

In some embodiments, the sending module 1020 is specifically configured to:
sending, by the network side device, at least one SIB1 to the terminal, where different SIB1s include the first configuration information corresponding to different SSB types.

In some embodiments, the sending module 1020 is further configured to:
send second configuration information to the terminal, where the second configuration information is used for updating at least one of an SSB parameter, a PRACH resource set, or an association relationship that correspond to the at least one SSB type.

In some embodiments, the sending module 1020 is specifically configured to:
send signaling to the terminal, where the signaling is used for indicating the second configuration information; and the signaling includes at least one of an RRC, a physical downlink control channel PDCCH, or a medium access control MAC control element CE.

The communication apparatus 1000 in the embodiment of the present disclosure may be an electronic device, such as an electronic device having an operating system, or a component in the electronic device, such as an integrated circuit or a chip. The electronic device may be a network side device, or another device other than the network side device. For example, the network side device may include, but is not limited to, the type of the network side device 12 listed above, and the another device may be a server, a network attached storage (Network Attached Storage, NAS), or the like. This is not specifically limited in embodiments of the present disclosure.

The communication apparatus 1000 according to the embodiment of the present disclosure can implement each process implemented by the network side device in the method embodiment of FIG. 5, and achieve the same technical effect. To avoid repetition, details are not described herein.

As shown in FIG. 11, an embodiment of the present disclosure further provides a communication device 1100, including a processor 1101 and a memory 1102. The memory 1102 stores a program or instructions runnable on the processor 1101. For example, when the communication device 1100 is a terminal, the program or instructions are executed by the processor 1101 to implement the steps performed by the terminal in the foregoing communication method embodiments, and the same technical effects can be achieved. When the communication device 1100 is a network side device, the program or the instructions are executed by the processor 1101 to implement each step performed by the network side device in the communication method embodiments, and the same technical effect can be achieved. To avoid repetition, details are not described herein.

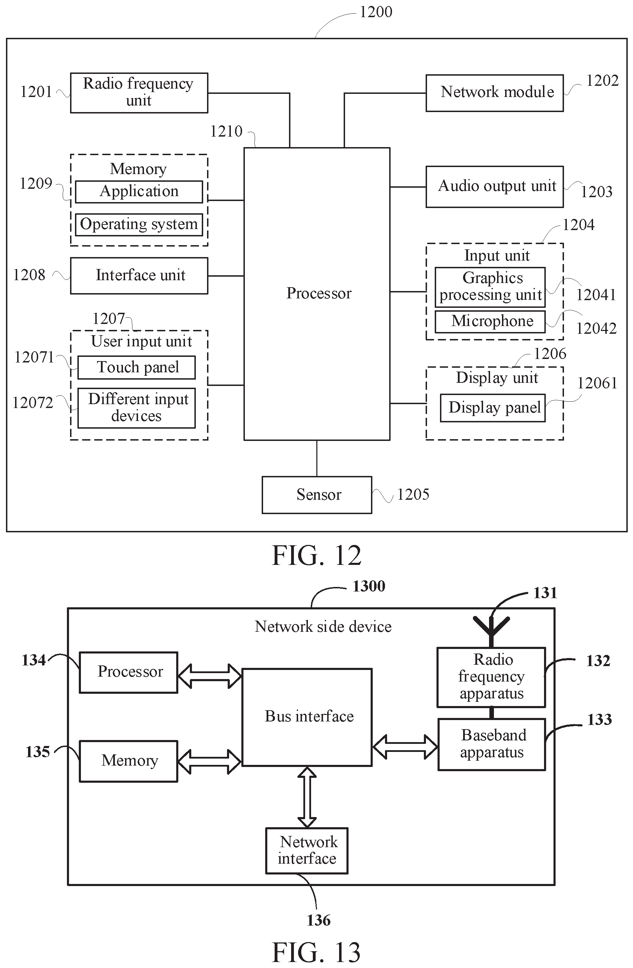

An embodiment of the present disclosure further provides a terminal, including a processor and a communication interface. The communication interface is coupled to the processor. The processor is configured to run a program or instructions, to implement the steps performed by the terminal in the method embodiment shown in FIG. 5. The terminal embodiment corresponds to the foregoing terminal side method embodiment. Each implementation process and implementation of the foregoing method embodiment can be applied to the terminal embodiment, and can achieve the same technical effects. Specifically, FIG. 12 is a schematic diagram of a hardware structure of a terminal according to an embodiment of the present disclosure.

The terminal 1200 includes, but is not limited to, at least some components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

Those skilled in the art may appreciate that the terminal 1200 may further include a power supply (such as a battery) for supplying power to the components. The power supply may be logically connected to the processor 1210 by a power management system, thereby implementing functions such as charging, discharging, and power consumption management by using the power management system. A terminal structure shown in FIG. 12 does not constitute a limitation to the terminal. The terminal may include more or fewer components than those shown in the figure, or some components may be combined, or a different component deployment may be used, and details are not described herein.

It should be understood that in the embodiment of the present disclosure, the input unit 1204 may include a graphics processing unit (Graphics Processing Unit, GPU) 12041 and a microphone 12042. The graphics processing unit 12041 performs processing on image data of a static picture or a video that is obtained by an image capture device (for example, a camera) in a video capture mode or an image capture mode. The display unit 1206 may include a display panel 12061, and the display panel 12061 may be configured in a form of a liquid crystal display, an organic light-emitting diode, or the like. The user input unit 1207 includes at least one of a touch panel 12071 or another input device 12072. The touch panel 12071 is also referred to as a touchscreen. The touch panel 12071 may include two parts of a touch detection apparatus and a touch controller. The another input device 12072 may include, but is not limited to, a physical keyboard, a functional key (such as a volume control key or a switch key), a track ball, a mouse, and a joystick, and details are not described herein.

In an embodiment of the present disclosure, the radio frequency unit 1201 receives downlink data from a network side device and then may transmit the downlink data to the processor 1210 for processing. In addition, the radio frequency unit 1201 may send uplink data to the network side device. Generally, the radio frequency unit 1201 includes, but is not limited to, an antenna, an amplifier, a transceiver, a coupler, a low noise amplifier, a duplexer, and the like.

The memory 1209 may be configured to store a software program or instructions and various data. The memory 1209 may mainly include a first storage area for storing a program or instructions, and a second storage area for storing data. The first storage area may store an operating system, an application program or an instruction required by at least one function (for example, a sound playback function, and an image display function), and the like. In addition, the memory 1209 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct Rambus random access memory (Direct Rambus RAM, DRRAM). The memory 1209 in the embodiment of the present disclosure includes, but is not limited to, these memories and any other suitable types of memories.

The processor 1210 may include one or more processing units. Optionally, the processor 1210 integrates an application processor and a modem processor. The application processor mainly processes operations related to an operating system, a user interface, an application, and the like. The modem processor mainly processes wireless communication signals, and is, for example, a baseband processor. It can be understood that the modem processor may not be integrated into the processor 1210.

The radio frequency unit 1201 is configured to receive first configuration information from a network side device, where the first configuration information is used for configuring a physical random access channel PRACH resource associated with at least one synchronization signal block SSB type.

The processor 1210 is configured to determine an SSB-to-PRACH resource association result of the at least one SSB type according to the first configuration information.

In the embodiments of the present disclosure, the first configuration information is sent to the terminal by the network side device, such that the terminal can determine the SSB-to-PRACH resource association result of the at least one SSB type according to the first configuration information. PRACH resources associated with different SSB types can be configured separately, such that SSB-to-PRACH resource association relationships of the different SSB types can be configured flexibly, and requirements of the different SSB types for the PRACH resources can be met.

It can be understood that reference may be made to relevant description of the embodiment of the method for an implementation process of each implementation mentioned in the embodiment. The same or corresponding technical effects can be achieved, and will not be repeated herein to avoid repetitions.

An embodiment of the present disclosure further provides a network side device, including a processor and a communication interface. The communication interface is coupled to the processor, and the processor is configured to run a program or instructions, to implement steps, performed by the network side device, of the method embodiment shown in FIG. 5. The embodiment of the network side device corresponds to the above method embodiment on the network side device, and each implementation process and implementation of the above method embodiment can be applied to the embodiment of the network side device, and can achieve the same technical effect.

Specifically, an embodiment of the present disclosure further provides a network side device. As shown in FIG. 13, the network side device 1300 includes: an antenna 131, a radio frequency apparatus 132, a baseband apparatus 133, a processor 134, and a memory 135. The antenna 131 is connected to the radio frequency apparatus 132. In an uplink direction, the radio frequency apparatus 132 receives information by using the antenna 131, and sends the received information to the baseband apparatus 133 for processing. In a downlink direction, the baseband apparatus 133 processes to-be-sent information, and sends the processed information to the radio frequency apparatus 132. The radio frequency apparatus 132 processes the received information and then sends the processed information through the antenna 131.

The method performed by the network side device in the foregoing embodiment may be implemented in the baseband apparatus 133, and the baseband apparatus 133 includes a baseband processor.

The baseband apparatus 133 may, for example, include at least one baseband board which is provided with a plurality of chips, as shown in FIG. 13, one of the chips is, for example, a baseband processor, and is connected to the memory 135 via a bus interface to call a program in the memory 135 to execute operations of a network device as shown in the above method embodiment.

The network side device may further include a network interface 136, and the interface is, for example, a common public radio interface (Common Public Radio Interface, CPRI).

Specifically, the network side device 1300 in the embodiment of the present disclosure further includes: instructions or a program stored in the memory 135 and executable on the processor 134. The processor 134 calls the instructions or the program in the memory 135 to perform steps performed by the network side device in the method performed by each module shown in FIG. 5, and achieves the same technical effects. To avoid repetition, details are not described herein.

An embodiment of the present disclosure further provides a readable storage medium, where the readable storage medium stores a program or instructions. The program or the instructions are executed by a processor to implement each process corresponding to the terminal of the communication method embodiment, and can achieve the same technical effects. To avoid repetition, details are not described herein.

The processor is the processor in the terminal described in the above embodiment. The readable storage medium includes a computer-readable storage medium, such as a computer read-only memory ROM, a random access memory RAM, a magnetic disk, or an optical disc. In some examples, the readable storage medium may be a non-transitory readable storage medium.

An embodiment of the present disclosure further provides a readable storage medium, where the readable storage medium stores a program or instructions. The program or the instructions are executed by a processor to implement each process corresponding to the network side device of the communication method embodiment, and can achieve the same technical effects. To avoid repetition, details are not described herein.

The processor is the processor in the network side device described in the above embodiment. The readable storage medium includes a computer-readable storage medium, such as a computer read-only memory ROM, a random access memory RAM, a magnetic disk, or an optical disc. In some examples, the readable storage medium may be a non-transitory readable storage medium.

An embodiment of the present disclosure further provides a chip. The chip includes a processor and a communication interface. The communication interface is coupled to the processor. The processor is configured to run a program or instructions, to implement each process corresponding to the terminal of the communication method embodiment, and can achieve the same technical effects. To avoid repetition, details are not described herein.

An embodiment of the present disclosure further provides a chip. The chip includes a processor and a communication interface. The communication interface is coupled to the processor. The processor is configured to run a program or instructions, to implement each process corresponding to the network side device of the communication method embodiment, and can achieve the same technical effects. To avoid repetition, details are not described herein.

It should be understood that the chip mentioned in the embodiment of the present disclosure may alternatively be referred to as a system-level chip, a system chip, a chip system, a system-on-chip, or the like.

An embodiment of the present disclosure further provides a computer program/program product, where the computer program/program product is stored in a storage medium. The computer program/program product is executed by at least one processor to implement each process corresponding to the terminal of the communication method embodiment, and can achieve the same technical effects. To avoid repetition, details are not described herein.

An embodiment of the present disclosure further provides a computer program/program product, where the computer program/program product is stored in a storage medium. The computer program/program product is executed by at least one processor to implement each process corresponding to the network side device of the communication method embodiment, and can achieve the same technical effects. To avoid repetition, details are not described herein.

An embodiment of the present disclosure further provides a communication system, including a terminal and a network side device. The terminal may be configured to perform steps performed by the terminal in the above communication method. The network side device may be configured to perform steps performed by the network side device in the above communication method.

It should be noted that the terms "comprise", "include" or their any other variations herein are intended to cover non-exclusive inclusions, such that a process, method, article, or apparatus including a series of elements not only includes those elements, but also includes other elements that are not explicitly listed, or also includes inherent elements of such a process, method, article, or apparatus. An element preceded by a statement "includes a..." does not, without more constraints, preclude the presence of additional identical elements in the process, method, article, or apparatus that includes the element. In addition, it should be noted that the scope of the method and apparatus in the implementations of the present disclosure is not limited to performing functions in an order shown or discussed, and may further include performing functions in a basically simultaneous manner or in a reverse order according to related functions. For example, the described method may be performed in an order different from the described order, and various steps may be added, omitted, or combined. In addition, features described with reference to some examples may be combined in other examples.

According to the descriptions of the foregoing implementations, a person skilled in the art may clearly understand that the methods in the foregoing embodiments may be implemented by using a computer software product and a necessary universal hardware platform, or may certainly be implemented by using hardware. The computer software product is stored in a storage medium (for example, a ROM, a RAM, a magnetic disk, or an optical disc), and includes several instructions for enabling a terminal or a network side device to perform the methods described in the embodiments of the present disclosure.

The foregoing describes the embodiments of the present disclosure with reference to the accompanying drawings. However, the present disclosure is not limited to the foregoing specific implementations. The foregoing specific implementations are merely examples, but are not limitative. Inspired by the present disclosure, persons of ordinary skill in the art may further make implementations in many forms without departing from the purposes of the present disclosure and the protection scope of the claims, and all the implementations shall fall within the protection of the present disclosure.

## Claims

1. A method for communication, comprising:
receiving, by a terminal, first configuration information from a network side device, wherein the first configuration information is used for configuring a physical random access channel PRACH resource associated with at least one synchronization signal block SSB type; and
determining, by the terminal, an SSB-to-PRACH resource association result of the at least one SSB type according to the first configuration information.

2. The method according to claim 1, wherein the first configuration information comprises at least one of an SSB parameter, a PRACH resource set, or an SSB-to-PRACH resource association relationship.

3. The method according to claim 2, wherein the first configuration information meets at least one of the following:
different SSB types correspond to the same SSB parameter, or different SSB types correspond to different SSB parameters;
different SSB types correspond to the same PRACH resource set, or different SSB types correspond to different PRACH resource sets; or
different SSB types correspond to the same association relationship, or different SSB types correspond to different association relationships.

4. The method according to claim 2 or 3, wherein the SSB parameter comprises at least one of the following:
a maximum number of SSBs corresponding to the SSB type, a number of SSBs used by a current cell, or at least one SSB used by a current cell.

5. The method according to any one of claims 2 to 4, wherein the SSB-to-PRACH resource association relationship comprises at least one of the following:
an association relationship from at least one SSB to at least one PRACH transmission occasion RO;
an association relationship from at least one SSB to at least one RO group; or
an association relationship from at least one SSB group to at least one RO group,
wherein the RO group comprises at least one RO, and the SSB group comprises at least one SSB.

6. The method according to claim 5, wherein different SSBs or different SSB groups are associated with different numbers of ROs, different numbers of RO groups, or RO groups comprising different numbers of ROs.

7. The method according to any one of claims 2 to 6, wherein in a case that at least two SSB types correspond to the same PRACH resource set, the determining, by the terminal, an SSB-to-PRACH resource association result of the at least one SSB type according to the first configuration information comprises:
performing, by the terminal, mapping in the same PRACH resource set according to SSBs corresponding to the at least two SSB types and the association relationships respectively corresponding to the at least two SSB types, and obtaining SSB-to-PRACH resource association results of the at least two SSB types.

8. The method according to claim 7, wherein the association relationships respectively corresponding to the at least two SSB types comprise at least one of the following:
a number ${N}_{TX}^{{SSB}_{{type}_{n}}}$ of SSBs corresponding to the n^{th} SSB type, wherein n is a positive integer;
a number *_{/}⁺_{,-_.} of SSBs, of the n^{th} SSB type, associated with one RO or RO group;
a number *₀⁺_{,-_.} of ROs or RO groups associated with one SSB in the n^{th} SSB type; or
a number 1_{*}²₊³_{,}⁻₋⁴_{_}⁵_{.}⁶⁷⁻ of preambles associated with one SSB of the n^{th} SSB type in one RO.

9. The method according to claim 8, wherein a product of reciprocals of ${N}_{TX}^{{SSB}_{{type}_{n}}}$ and ${N}_{type _ n}^{1}$ is an integer.

10. The method according to any one of claims 7 to 9, wherein the performing, by the terminal, mapping in the same PRACH resource set according to SSBs corresponding to the at least two SSB types and the association relationships respectively corresponding to the at least two SSB types, and obtaining SSB-to-PRACH resource association results of the at least two SSB types comprise:
determining first indexes for all SSBs corresponding to the at least two SSB types sequentially, and determining a first order for each RO in the PRACH resource set; and
mapping all the SSBs corresponding to the at least two SSB types to the ROs in the PRACH resource set according to the first indexes and the first order, and obtaining the SSB-to-PRACH resource association results of all the SSBs corresponding to the at least two SSB types.

11. The method according to any one of claims 7 to 9, wherein the performing, by the terminal, mapping in the same PRACH resource set according to SSBs corresponding to the at least two SSB types and the association relationships respectively corresponding to the at least two SSB types, and obtaining SSB-to-PRACH resource association results of the at least two SSB types comprise:
determining second indexes for all SSBs corresponding to the at least two SSB types sequentially;
determining a second order for each RO in the PRACH resource set, and determining a third order for a preamble on the each RO; and
mapping all the SSBs corresponding to the at least two SSB types to the preamble of the each RO in the PRACH resource set according to the second indexes, the second order, and the third order, and obtaining the SSB-to-PRACH resource association results of all the SSBs corresponding to the at least two SSB types.

12. The method according to any one of claims 7 to 11, further comprising:
determining at least one of a mapping cycle, an association period, or an association pattern period from an SSB to a PRACH resource, wherein the mapping cycle is a cycle where all the SSBs of the at least two SSB types are associated to the PRACH resource in one round, the association period comprises at least one mapping cycle, and the association pattern period comprises at least one association period;
determining a first time window according to at least one of the mapping cycle, the association period, or the association pattern period, wherein the first time window is an integer multiple of the mapping cycle, the association period, or the association pattern period; and
sending, by the terminal, a signal to the network side device in the first time window according to the SSB-to-PRACH resource association results of the at least two SSB types.

13. The method according to any one of claims 2 to 6, wherein in a case that at least two SSB types correspond to different PRACH resource sets, the determining, by the terminal, an SSB-to-PRACH resource association result of the at least one SSB type according to the first configuration information comprises:
performing, by the terminal according to SSBs respectively corresponding to the at least two SSB types and the association relationships respectively corresponding to the at least two SSB types, mapping in the PRACH resource sets corresponding to the at least two SSB types separately, and obtaining SSB-to-PRACH resource association results of the at least two SSB types.

14. The method according to claim 13, further comprising:
sending, by the terminal according to the SSB-to-PRACH resource association results of the at least two SSB types, a signal to the network side device in at least two second time windows respectively corresponding to the at least two SSB types.

15. The method according to claim 14, further comprising:
determining at least one of a mapping cycle, an association period, or an association pattern period, from an SSB to a PRACH resource, of the at least two SSB types separately, wherein the mapping cycle of each of the SSB types is a cycle where all SSBs of each of the SSB types are associated to the PRACH resource in one round, the association period comprises at least one mapping cycle, and the association pattern period comprises at least one association period; and
determining the second time window of each of the SSB types according to at least one of the mapping cycle, the association period, or the association pattern period of each of the SSB types.

16. The method according to claim 15, wherein the second time window of each of the SSB types is an integer multiple of the mapping cycle, the association period, or the association pattern period corresponding to each of the SSB types.

17. The method according to claim 15, wherein the at least two second time windows are determined according to the maximum mapping cycles, association periods, or association pattern periods of the at least two SSB types respectively.

18. The method according to any one of claims 1 to 17, wherein the receiving, by a terminal, first configuration information from a network side device comprises:
receiving, by the terminal, a system information block SIB1 from the network side device, wherein the SIB1 comprises the first configuration information.

19. The method according to any one of claims 1 to 17, wherein the receiving, by a terminal, first configuration information from a network side device comprises:
receiving, by the terminal, at least one SIB1 from the network side device, wherein different SIB1s comprise the first configuration information corresponding to different SSB types.

20. The method according to any one of claims 1 to 19, further comprising:
receiving, by the terminal, second configuration information from the network side device, wherein the second configuration information is used for updating at least one of an SSB parameter, a PRACH resource set, or an association relationship that correspond to the at least one SSB type.

21. A method for communication, comprising:
determining, by a network side device, first configuration information, wherein the first configuration information is used for configuring a physical random access channel PRACH resource associated with at least one synchronization signal block SSB type; and
sending, by the network side device, the first configuration information to a terminal.

22. The method according to claim 21, wherein the first configuration information comprises at least one of an SSB parameter, a PRACH resource set, or an SSB-to-PRACH resource association relationship.

23. The method according to claim 22, wherein the first configuration information meets at least one of the following:
different SSB types correspond to the same SSB parameter, or different SSB types correspond to different SSB parameters;
different SSB types correspond to the same PRACH resource set, or different SSB types correspond to different PRACH resource sets; or
different SSB types correspond to the same association relationship, or different SSB types correspond to different association relationships.

24. The method according to claim 22 or 23, wherein the SSB parameter comprises at least one of the following:
a maximum number of SSBs corresponding to the SSB type, a number of SSBs used by a current cell, or at least one SSB used by a current cell.

25. The method according to any one of claims 22 to 24, wherein the SSB-to-PRACH resource association relationship comprises at least one of the following:
an association relationship from at least one SSB to at least one PRACH transmission occasion RO;
an association relationship from at least one SSB to at least one RO group; or
an association relationship from at least one SSB group to at least one RO group,
wherein the RO group comprises at least one RO, and the SSB group comprises at least one SSB.

26. The method according to claim 25, wherein different SSBs or different SSB groups are associated with different numbers of ROs, different numbers of RO groups, or RO groups comprising different numbers of ROs.

27. The method according to any one of claims 21 to 26, wherein the sending, by the network side device, the first configuration information to a terminal comprises:
sending, by the network side device, a system information block SIB1 to the terminal, wherein the SIB1 comprises the first configuration information.

28. The method according to any one of claims 21 to 26, wherein the sending, by the network side device, the first configuration information to a terminal comprises:
sending, by the network side device, at least one SIB1 to the terminal, wherein different SIB1s comprise the first configuration information corresponding to different SSB types.

29. The method according to any one of claims 21 to 28, further comprising:
sending, by the network side device, second configuration information to the terminal, wherein the second configuration information is used for updating at least one of an SSB parameter, a PRACH resource set, or an association relationship that correspond to the at least one SSB type.

30. A communication apparatus, comprising:
a receiving module configured to receive first configuration information from a network side device, wherein the first configuration information is used for configuring a physical random access channel PRACH resource associated with at least one synchronization signal block SSB type; and
a determining module configured to determine an SSB-to-PRACH resource association result of the at least one SSB type according to the first configuration information.

31. A communication apparatus, comprising:
a determining module configured to determine first configuration information, wherein the first configuration information is used for configuring a physical random access channel PRACH resource associated with at least one synchronization signal block SSB type; and
a sending module configured to send the first configuration information to a terminal.

32. A terminal, comprising a processor and a memory, wherein the memory stores a program or instructions runnable on the processor, and the program or the instructions, when executed by the processor, implement steps of the method for communication according to any one of claims 1 to 20.

33. A network side device, comprising a processor and a memory, wherein the memory stores a program or instructions runnable on the processor, and the program or the instructions, when executed by the processor, implement steps of the method for communication according to any one of claims 21 to 29.

34. A readable storage medium, wherein the readable storage medium stores a program or instructions, and the program or instructions, when executed by a processor, implement steps of the method for communication according to any one of claims 1 to 20, or the method for communication according to any one of claims 21 to 29.
